# EUROPÄISCHE PATENTSCHRIFT

(11) **EP 3 967 537 B1**
(45) Veröffentlichungstag und Bekanntmachung des Hinweises auf die Patenterteilung: **22.05.2024**
(21) Anmeldenummer: 21191949.3
(22) Anmeldetag: 18.08.2021
(51) Int. Cl.: B60K 35/00, G02B 27/01, G02B 30/00, G02B 30/50, G01C 21/36, G06T 11/00

(54) **VERFAHREN ZUR DARSTELLUNG EINES VIRTUELLEN ELEMENTS**
METHOD FOR PRODUCING A VIRTUAL ELEMENT
PROCÉDÉ DE REPRÉSENTATION D'UN ÉLÉMENT VIRTUEL

(30) Priorität: 09.09.2020 DE 102020211298
(43) Veröffentlichungstag der Anmeldung: 16.03.2022
(73) Patentinhaber: Volkswagen Aktiengesellschaft, 38440 Wolfsburg (DE)
(72) Erfinder: Sadovitch, Vitalij, 38102 Braunschweig (DE); Kunze, Alexander, 13585 Berlin (DE); Sandbrink, Johanna, 38102 Braunschweig (DE); Wittkämper, Michael, 38106 Braunschweig (DE)

(56) Entgegenhaltungen:
- WO-A1-2019/188581
- WO-A1-2019/189515
- WO-A1-2020/009219
- DE-A1-102018 203 462
- JP-A- 2019 138 773
- US-A1- 2019 049 724
- US-A1- 2020 143 569

## Beschreibung

Die Erfindung betrifft ein Verfahren zur Darstellung mindestens eines virtuellen Elements in einem Anzeigebereich mindestens einer Anzeigeeinrichtung eines Fahrzeugs, wobei im Anzeigebereich der Anzeigeeinrichtung ein dreidimensionaler Raum dargestellt wird, wobei auf Basis mindestens einer Datenquelle dreidimensionale Koordinaten im dargestellten dreidimensionalen Raum für die Verortung mindestens eines virtuellen Elements bestimmt werden, wobei das mindestens eine virtuelle Element als zweidimensionale Abbildung in den dreidimensionalen Raum, der im Anzeigebereich der Anzeigeeinrichtung dargestellt wird, transformiert wird und wobei das mindestens eine virtuelle Element im Anzeigebereich der Anzeigeeinrichtung in Bezug auf den dreidimensionalen Raum perspektivisch korrekt im Blickfeld des Fahrers dargestellt wird.

Daneben betrifft die Erfindung eine Vorrichtung zur Darstellung mindestens eines virtuellen Elements, mit mindestens einer Anzeigeeinrichtung mit mindestens einem Anzeigebereich.

Außerdem betrifft die Erfindung ein Fahrzeug mit einer Vorrichtung zur Darstellung mindestens eines virtuellen Elements.

Mit der stetigen Weiterentwicklung von Virtual- und Augmented-Reality-Technologien und -Anwendungen finden diese auch Einzug in das Automobil. Bei Augmented-Reality (AR) handelt es sich um die Anreicherung der realen Welt durch virtuelle Elemente, die im dreidimensionalen Raum ortskorrekt registriert beziehungsweise verortet sind und eine Echtzeitinteraktion erlauben. Eine mögliche technische Realisierung um den Fahrerarbeitsplatz entsprechend mit perspektivisch korrekten virtuellen Augmentierungen anzureichern, bietet das Head-Up-Display (HUD).

Gerade bei Head-Up-Displays entsteht die virtuelle Anzeige durch eine im Armaturenbrett integrierte bildgebende Einheit, wie beispielsweise ein TFT-Display. Dieses Bild wird über mehrere Spiegel in Richtung der Windschutzscheibe gelenkt, wo das Licht in das Auge des Fahrers reflektiert wird. Der Fahrer nimmt dieses Bild als eine virtuelle Anzeige im Sichtfeld wahr. Bei der Auslegung solcher Systeme wird der Bereich, in den das Licht reflektiert wird, räumlich begrenzt, um eine höhere Helligkeit durch geringere Lichtstreuung zu erzielen. Dieser Bereich wird als "EyeBox" bezeichnet, da sich das Blickfeld des Fahrers in diesem Bereich befinden muss, um eine Wahrnehmung des virtuellen Bildes zu ermöglichen.

Ein wesentliches Problem liegt bei Head-Up-Displays darin, dass virtuelle 3D-Elemente, die in einem dreidimensionalen Raum verortet sind, auf einer 2-dimensionalen Anzeige dargestellt werden müssen. Dies führt dazu, dass die virtuellen Elemente vom Betrachter teilweise nicht als Bestandteile der Umgebung wahrgenommen werden können. Eine als Erweiterung der Umgebung auf der Straße liegende, nach vorne laufende Linie könnte, aufgrund der Auslegung der virtuellen Bildebene, teilweise nicht als auf der Fahrbahn liegend, sondern als stehend und nach oben laufend wahrgenommen werden. Dieser Wahrnehmungsfehler wird im Folgenden als Rampeneffekt bezeichnet. Um den Rampeneffekt zu reduzieren, muss die menschliche Tiefenwahrnehmung berücksichtig werden.

Die DE 11 2017 006 054 T5 zeigt beispielsweise ein System zur Darstellung von virtuellen Elementen auf einem Head-Up-Display. Wobei eine Vorrichtung, die dazu dient, virtuelle Elemente auf dem Anzeigebereich des Head-Up-Displays darzustellen, eine optische Achse aufweist, die unterschiedliche Bildrealisierungsflächen umfasst, sodass Bilder, die auf dem Anzeigebereich dargestellt werden, eine unterschiedliche virtuelle Distanz aufweisen, sodass der Betrachter unterschiedliche Tiefenwahrnehmungen der virtuellen Elemente erfährt.

Ein Nachteil besteht darin, dass bei einer Erhöhung der Bilddistanz ein größerer Bauraum für die Anzeigevorrichtung benötigt wird, um die Tiefenwahrnehmung zu verbessern.

Die US 2011/0102303 A1 zeigt ein Verfahren zur Darstellung von virtuellen Elementen in Form von Abbiegehinweisen, die ein Abbiegemanöver schrittweise in Abhängigkeit der Entfernung ankündigen. Die Abbiegehinweise sind beispielsweise in einem Abstand von 90 m, 60 m und 30 m vor der Abbiegung als virtuelle Elemente im Blickfeld des Fahrers dargestellt und nach Möglichkeit perspektivisch korrekt dargestellt. Allerdings besteht dabei die Gefahr, dass der oben genannte Rampeneffekt eintritt.

In der WO 2020/009219 A1 wird ein Head-up Display für ein Fahrzeug gezeigt, mit dem ein virtuelles Element während der Fahrt als mit der Straßenoberfläche verankert dargestellt wird, wobei der virtuelle Bildanzeigebereich zumindest teilweise unterhalb der Straßenoberfläche angeordnet ist.

Die WO 2019/188591 A1 zeigt eine Vorrichtung zum Steuern der Anzeige eines Head-up Display, bei der ein virtuelles Linienbild passend zu einer Fahrbahnmarkierung angezeigt wird.

Der Erfindung liegt nun die Aufgabe zugrunde, ein Verfahren zum Anzeigen eines virtuellen Elements, eine entsprechende Vorrichtung sowie ein Fahrzeug anzugeben, bei denen die Tiefenwahrnehmung von virtuellen Elementen im Anzeigebereich einer Anzeigeeinrichtung verbessert wird.

Diese Aufgabe ist bei der vorliegenden Erfindung zunächst durch die Merkmale des Kennzeichnungsteils des Patentanspruchs 1 dadurch gelöst, dass das virtuelle Element aus mindestens einem ersten virtuellen Teilelement und einem zweiten virtuellen Teilelement aufgebaut wird, wobei das erste virtuelle Teilelement perspektivisch im Anzeigebereich vor dem zweiten Teilelement angeordnet wird.

Beim Anzeigebereich der Anzeigeeinrichtung kann es sich um ein Display im Mittelbereich oder im Cockpitbereich, beispielsweise im Kombiinstrument des Fahrzeugs, handeln. Alternativ oder zusätzlich kann der Anzeigebereich der Anzeigeeinrichtung als Head-Up-Display ausgestaltet sein. Unter Head-Up-Display ist ein Anzeigebereich zu verstehen, bei dem der Fahrer seine Kopfhaltung beziehungsweise Blickrichtung beibehalten kann, weil die Informationen in sein Sichtfeld, beispielsweise auf die Windschutzscheibe des Fahrzeugs, projiziert werden.

Der dargestellte dreidimensionale Raum kann vorzugsweise einen Bereich außerhalb des Fahrzeugs in Fahrtrichtung beschreiben. Bei einem Head-Up-Display ist der Anzeigebereich der Anzeigeeinrichtung beziehungsweise der dreidimensionale Raum gleichzusetzen mit dem Blick durch die Windschutzscheibe. Der dreidimensionale Raum ist dann folglich der Raum vor dem Fahrzeug im Blickfeld des Fahrers beziehungsweise des Beifahrers. Bei den entsprechend zum virtuellen Element berechneten dreidimensionalen Koordinaten kann es sich beispielsweise um kartesische Koordinaten handeln.

Die zur Berechnung der Koordinaten benötigten Datenquellen können unterschiedlicher Art sein. Bevorzugt handelt es sich bei diesen Datenquellen um Fahrzeugdaten beziehungsweise Navigationsdaten, die durch die Positionierungssensorik des Fahrzeugs, wie zum Beispiel GPS, Drehratensensoren oder Kameras aufgenommen werden.

Bei dem virtuellen Element kann es sich um verschiedene Bildelemente und/oder Schaltflächen handeln, die im Anzeigebereich der Anzeigeeinrichtung dargestellt werden. Die virtuellen Elemente sind dabei in Form einer Begrenzung einer Fahrspur dargestellt.

Weiterhin ist mindestens ein drittes virtuelles Teilelement vorgesehen. Das dritte virtuelle Teilelement wird perspektivisch im Anzeigebereich hinter dem zweiten Teilelement angeordnet. Das erste virtuelle Teilelement weist einen ersten Abstand zum zweiten virtuellen Teilelement auf, wobei das zweite virtuelle Teilelement einen zweiten Abstand zum dritten virtuellen Teilelement aufweist. Der erste Abstand ist größer als der zweite Abstand. Je weiter die virtuellen Teilelemente perspektivisch im Hintergrund liegen, desto näher werden sie aneinander gerückt, um die Tiefenwahrnehmung für den Fahrer des Fahrzeugs zu verbessern.

Die virtuellen Teilelemente ergeben zusammen genommen das gesamte virtuelle Element. Durch die Aufteilung des virtuellen Elements ist es möglich, die Teilelemente unterschiedlich auszugestalten, um die Tiefenwahrnehmung für den Betrachter beziehungsweise den Fahrer des Fahrzeugs möglichst realistisch wirken zu lassen.

Weitere bevorzugte Ausgestaltungen der Erfindung ergeben sich aus den übrigen, in den Unteransprüchen genannten Merkmalen.

Dazu ist bei einer ersten Ausgestaltung des erfindungsgemäßen Verfahrens vorgesehen, dass das erste virtuelle Teilelement und das zweite virtuelle Teilelement mit einer Tiefenausdehnung dargestellt werden, sodass das virtuelle Element mit zunehmender Entfernung kleiner und höher im Anzeigebereich der Anzeigeeinrichtung dargestellt wird. Elemente, die im Hintergrund dargestellt werden, sind bei einer perspektivischen Darstellung in der Regel kleiner als Elemente im Vordergrund. Eine im Anzeigebereich dargestellte Linie, die beispielsweise die Berandung der Fahrbahn darstellen soll, kann also perspektivisch derart dargestellt werden, dass die virtuellen Teilelemente, durch die diese Linie dargestellt wird, ihre Größe schrittweise verkleinern. Der Rampeneffekt tritt dann nicht auf, da für den Fahrer der Anschein entsteht, dass die Linie sich in die Bildebene erstreckt.

Bei einer weiteren vorteilhaften Ausgestaltung des erfindungsgemäßen Verfahrens ist vorgesehen, dass das erste virtuelle Teilelement und das zweite virtuelle Teilelement einen Texturgradienten aufweisen. Auf diese Weise können bei den virtuellen Teilelementen, die weiter im Hintergrund liegenden Teilelemente mit einer anderen Textur versehen werden, als die virtuellen Teilelemente, die weiter im Vordergrund liegen. Somit kann eine realistischere Tiefenwahrnehmung generiert werden.

Alternativ oder zusätzlich ist bei einer weiteren Ausgestaltung des erfindungsgemäßen Verfahrens vorgesehen, dass das erste virtuelle Teilelement und das zweite virtuelle Teilelement einen Schärfegradienten aufweisen. Analog zu den obigen Ausführungen können die virtuellen Teilelemente, die weiter im Hintergrund liegen, eine höhere Unschärfe aufweisen als die virtuellen Teilelemente, die weiter im Vordergrund liegen, wodurch eine realistischere Tiefenwahrnehmung für den Fahrer des Fahrzeugs generiert werden kann. In Abhängigkeit der Distanz der dreidimensionalen Objekte kann es bei geringen Distanzen auch sinnvoll sein, dass die näher im Vordergrund liegenden Objekte eine geringere Schärfe aufweisen als die weiter im Hintergrund liegenden dreidimensionalen Objekte. Eine Kombination beider Ausgestaltungen ist ebenfalls möglich. Hierzu sind mindestens drei virtuelle Teilelemente notwendig, wobei das vordere virtuelle Teilelement und das hintere virtuelle Teilelement jeweils eine höhere Unschärfe aufweisen als das mittlere virtuelle Teilelement.

Ebenfalls alternativ oder zusätzlich ist bei einer weiteren Ausgestaltung der Erfindung vorgesehen, dass das erste virtuelle Element und das zweite virtuelle Element einen Helligkeitsgradienten aufweisen. Entsprechend weiter im Hintergrund liegende virtuelle Teilelemente können eine geringere Helligkeit aufweisen, als virtuelle Teilelemente, die weiter im Vordergrund liegen, um die Tiefenwahrnehmung für den Fahrer des Fahrzeugs realistischer zu gestalten.

Bei einer bevorzugten Ausgestaltung der Erfindung wird die Qualität der geometrisch korrekten Darstellung des virtuellen Elements in Abhängigkeit der visuellen Qualität des virtuellen Elements für einen Fahrer des Fahrzeugs überprüft.

Eine besonders bevorzugte Ausgestaltung des erfindungsgemäßen Verfahrens sieht darüber hinaus vor, dass die Qualität der geometrisch korrekten Darstellung des virtuellen Elements reduziert wird, wenn die visuelle Qualität des virtuellen Elements einen zuvor bestimmten Grenzwert erreicht. In Abhängigkeit der Perspektive des Betrachters kann die perspektivisch korrekte Darstellung dazu führen, dass Abstände zwischen virtuellen Teilelementen so klein werden, dass sie nicht mehr wahrnehmbar sind und die Teilobjekte sich in der subjektiven Wahrnehmung überlagern.

Daher sieht die Erfindung vor, dass in so einem Fall von einer 100 prozentigen geometrischen Korrektheit zu Gunsten einer höheren visuellen Qualität abgesehen wird. In diesem Fall bedeutet es, die Abstände zwischen den Teilobjekten nicht über die gesamte Länge der Linien konstant zu halten, sondern mit zunehmender Entfernung im dreidimensionalen Raum gerade so weit zu erhöhen, dass die Abstände wahrnehmbar bleiben und auch eine Reduktion der Abstände über die gesamte Länge wahrnehmbar bleibt.

Die zuvor genannte Aufgabe wird außerdem gelöst von einer Vorrichtung, gemäß dem Kennzeichnungsteil des Patentanspruchs 9, dass die Anzeigeeinrichtung dafür ausgelegt ist, ein erfindungsgemäßes Verfahren durchzuführen. Die obigen Ausführungen zum erfindungsgemäßen Verfahren gelten entsprechend auch für die erfindungsgemäße Vorrichtung.

Bei der Vorrichtung kann es sich beispielsweise um ein Navigationssystem handeln, das eine grafische Ausgabe von kontaktanalogen Elementen gemäß der erfindungsgemäßen Vorrichtung ermöglicht.

Daneben wird die zuvor genannte Aufgabe gelöst von einem Fahrzeug, gemäß dem Kennzeichnungsteil des Patentanspruchs 10, mit einer Vorrichtung zur Darstellung mindestens eines virtuellen Elements, wobei die Vorrichtung erfindungsgemäß ausgestaltet ist. Die obigen Ausführungen zur erfindungsgemäßen Vorrichtung gelten entsprechend auch für das erfindungsgemäße Fahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: schematisch eine aus dem Stand der Technik bekannte Darstellung eines kontaktanalogen virtuellen Elements und
- Figur 2: schematisch die Darstellung eines kontaktanalogen virtuellen Elements gemäß einem Ausführungsbeispiel eines erfindungsgemäßen Verfahrens.

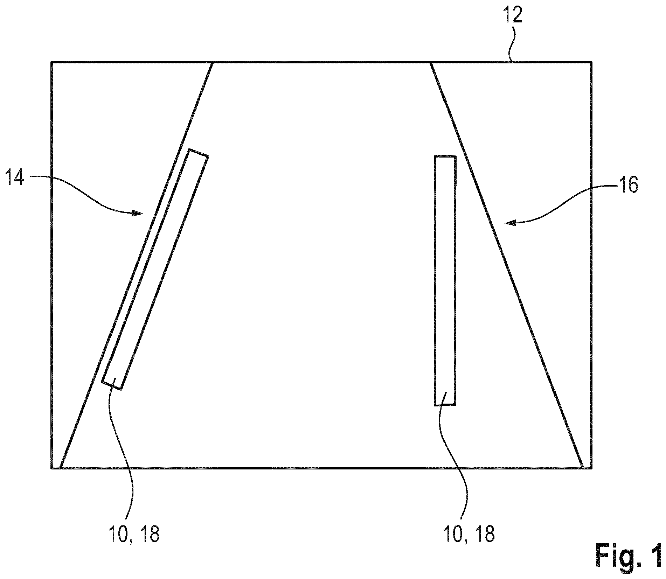

Figur 1 zeigt die Darstellung eines virtuellen Elements 10 im Anzeigebereich 12 einer Anzeigeeinrichtung 14, wie sie im Stand der Technik üblich ist. Dabei wird im Anzeigebereich 12 der Anzeigeeinrichtung 14 ein dreidimensionaler Raum 16 dargestellt. Bei der Anzeigeeinrichtung handelt es sich in dieser Ausführung um ein Head-Up-Display. Auf Basis mindestens einer Datenquelle werden dreidimensionale Koordinaten im dargestellten dreidimensionalen Raum 16 für die Verortung mindestens eines virtuellen Elements 10 bestimmt.

Das virtuelle Element 10 wird dann als zweidimensionale Abbildung 18 in den dreidimensionalen Raum 16 der im Anzeigebereich 12 der Anzeigeeinrichtung 14 dargestellt wird, transformiert. Anschließend wird das virtuelle Element 10 im Anzeigebereich 12 der Anzeigeeinrichtung 14 in Bezug auf den dreidimensionalen Raum 16 perspektivisch korrekt im Blickfeld des Fahrers dargestellt. Im vorliegenden Beispiel werden zwei virtuelle Elemente 10 in Form von Linien als Begrenzung der Fahrspur angezeigt.

Ein wesentliches Problem liegt bei der Darstellung von perspektivisch korrekt dargestellten Elementen darin, dass virtuelle Elemente 10, die in einem dreidimensionalen Raum 16 verortet sind, auf einem 2-dimensionalen Anzeigebereich 12 dargestellt werden müssen. Dies führt dazu, dass die virtuellen Elemente 10 vom Betrachter teilweise nicht als Bestandteile der Umgebung wahrgenommen werden können. So ist in Figur 1 eine Erweiterung der Umgebung um auf der Straße liegende, nach vorne laufende Linien zur Visualisierung der Fahrspur beabsichtigt. Jedoch können diese Linien, aufgrund der Auslegung der virtuellen Bildebene, teilweise nicht als auf der Fahrbahn liegend, sondern, aufgrund des Rampeneffekts, als stehend und nach oben laufend wahrgenommen werden.

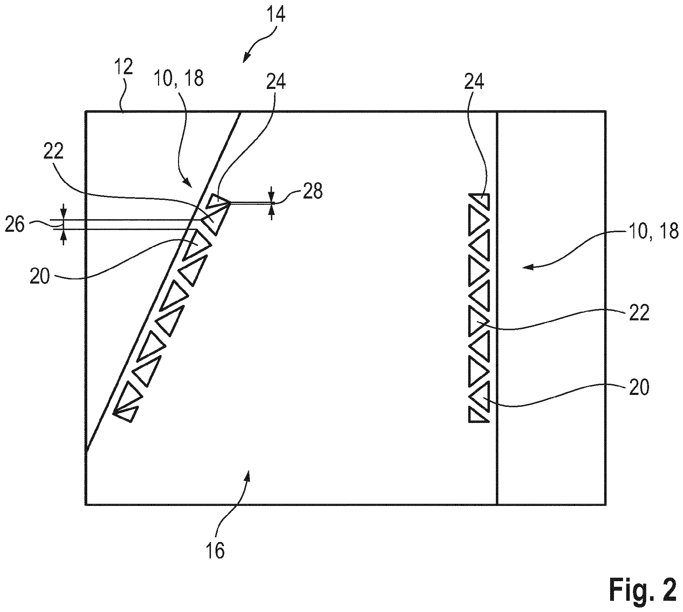

Figur 2 zeigt eine Darstellung eines Ausführungsbeispiels eines erfindungsgemäßen Verfahrens, bei denen die Nachteile aus dem Stand der Technik vermieden werden. Grundsätzlich könnte eine Verbesserung der Tiefenwahrnehmung durch stereoskopische Bildgeber verbessert werden. Mithilfe eines stereoskopischen Bildgebers könnten zwei separate Bilder für die beiden Augen generiert werden. Dadurch wird ein 3D-Bild wahrgenommen. Allerdings tritt bei stereoskopischen Displays der Akkommodations-Vergenz Konflikt auf, der zum Beispiel zu Kopfschmerzen führen kann. Dieser Effekt wird beispielsweise häufig in 3D-Kinos beobachtet.

In Figur 2 sind die virtuellen Elemente 10 in virtuelle Teilelemente 20, 22, 24 aufgeteilt. Dabei ist ein erstes virtuelles Teilelement 20 perspektivisch vor einem zweiten virtuellen Teilelement 22 angeordnet, wobei ein drittes virtuelles Teilelement 24 perspektivisch hinter dem zweiten virtuellen Teilelement 22 angeordnet ist. In der Darstellung sind noch weitere virtuelle Teilelemente vorgesehen.

Durch Aufteilung der virtuellen Elemente 10 in virtuelle Teilelemente 20, 22, 24 können die virtuellen Teilelemente 20, 22, 24 beispielsweise mit Texturgradienten versehen sein, die es ermöglichen, die Tiefenwahrnehmung der virtuellen Elemente zu verbessern. Dabei weist das erste virtuelle Teilelement 20 einen ersten Abstand 26 zum zweiten virtuellen Teilelement 22 auf. Das zweite virtuelle Teilelement 22 weist einen zweiten Abstand 28 zum dritten virtuellen Teilelement 24 auf. Der erste Abstand 26 ist größer als der zweite Abstand 28. Somit ist der Abstand zwischen zwei virtuellen Teilelementen umso kleiner, je weiter diese virtuellen Teilelemente perspektivisch im Hintergrund angeordnet sind, wodurch die Tiefenwahrnehmung verbessert wird.

In Abhängigkeit der Perspektive des Betrachters kann die perspektivisch korrekte Darstellung jedoch auch dazu führen, dass die Abstände 26, 28 zwischen den virtuellen Teilelementen 20, 22, 24 so klein werden, dass sie nicht mehr wahrnehmbar sind und die virtuellen Teilelemente 20, 22, 24 sich in der subjektiven Wahrnehmung überlagern. Daher ist bei diesem Ausführungsbeispiel des Verfahrens vorgesehen, dass in so einem Fall von einer 100 prozentigen geometrischen Korrektheit zu Gunsten einer höheren visuellen Qualität abgesehen wird. In diesem Fall bedeutet es, die Abstände 26, 28 zwischen den Teilobjekten nicht über die gesamte Länge der Linien konstant zu halten, sondern mit zunehmender Entfernung im dreidimensionalen Raum 16 gerade so weit zu erhöhen, dass die Abstände 26, 28 wahrnehmbar bleiben und auch eine Reduktion der Abstände 26, 28 über die gesamte Länge wahrnehmbar bleibt.

Zusätzlich ist bei diesem Ausführungsbeispiel vorgesehen, dass die virtuellen Teilelemente 20. 24, 28, und/oder das virtuelle Element 10 als Ganzes eine Tiefenausdehnung aufweist, sodass das virtuelle Element 10 mit zunehmender Entfernung kleiner und höher im Anzeigebereich 12 der Anzeigeeinrichtung 14 dargestellt werden kann. Daneben ist vorgesehen, dass die virtuellen Teilelemente 20. 24, 28, und/oder das virtuelle Element 10 als Ganzes, mit einem Schärfegradienten versehen sind, der es ermöglicht, dass virtuelle Elemente 10 umso diffuser dargestellt werden, je weiter diese perspektivisch entfernt sind. Außerdem ist vorgesehen, dass die virtuellen Teilelemente 20. 24, 28, und/oder das virtuelle Element 10 als Ganzes, einen Helligkeitsgradienten aufweist, der es ermöglicht, dass virtuelle Elemente 10 umso dunkler dargestellt werden, je weiter diese perspektivisch entfernt sind.

### Bezugszeichenliste

- 10: Virtuelles Element
- 12: Anzeigebereich
- 14: Anzeigeeinrichtung
- 16: Dreidimensionaler Raum
- 18: Zweidimensionale Abbildung
- 20: Erstes virtuelles Teilelement
- 22: Zweites virtuelles Teilelement
- 24: Drittes virtuelles Teilelement
- 26: Erster Abstand
- 28: Zweiter Abstand

## Patentansprüche

1. Verfahren zur Darstellung mindestens eines virtuellen Elements (10) in einem Anzeigebereich (12) mindestens einer Anzeigeeinrichtung (14) eines Fahrzeugs, wobei im Anzeigebereich (12) der Anzeigeeinrichtung (14) ein dreidimensionaler Raum (16) dargestellt wird, wobei auf Basis mindestens einer Datenquelle dreidimensionale Koordinaten im dargestellten dreidimensionalen Raum (16) für die Verortung mindestens eines virtuellen Elements (10) bestimmt werden, wobei das mindestens eine virtuelle Element (10) als zweidimensionale Abbildung (18) in den dreidimensionalen Raum (16), der im Anzeigebereich (12) der Anzeigeeinrichtung (14) in Form einer Begrenzung einer Fahrspur dargestellt wird, transformiert wird und wobei das mindestens eine virtuelle Element (10) im Anzeigebereich (12) der Anzeigeeinrichtung (14) in Bezug auf den dreidimensionalen Raum (16) perspektivisch korrekt im Blickfeld des Fahrers dargestellt wird, wobei das virtuelle Element (10) aus mindestens einem ersten virtuellen Teilelement (20) und einem zweiten virtuellen Teilelement (22) aufgebaut wird, wobei das erste virtuelle Teilelement (20) perspektivisch im Anzeigebereich vor dem zweiten Teilelement (22) angeordnet wird, **dadurch gekennzeichnet, dass** mindestens ein drittes virtuelles Teilelement (24) vorgesehen ist, dass das dritte virtuelle Teilelement (24) perspektivisch im Anzeigebereich (12) hinter dem zweiten virtuellen Teilelement (22) angeordnet wird, dass das erste virtuelle Teilelement (20) einen ersten Abstand zum zweiten virtuellen Teilelement (22) aufweist, dass das zweite virtuelle Teilelement (22) einen zweiten Abstand zum dritten virtuellen Teilelement (24) aufweist und dass der erste Abstand (26) größer ist als der zweite Abstand (28).

2. Verfahren nach Anspruch 1, **dadurch gekennzeichnet, dass** das erste virtuelle Teilelement (20) und das zweite virtuelle Teilelement (22) mit einer Tiefenausdehnung dargestellt werden sodass das virtuelle Element (10) mit zunehmender Entfernung kleiner und höher im Anzeigebereich (12) der Anzeigeeinrichtung (14) dargestellt wird.

3. Verfahren nach Anspruch 1 oder 2, **dadurch gekennzeichnet, dass** das erste virtuelle Teilelement (20) und das zweite virtuelle Teilelement (22) einen Texturgradienten aufweisen.

4. Verfahren nach einem der Ansprüche 1 bis 3, **dadurch gekennzeichnet, dass** das erste virtuelle Teilelement (20) und das zweite virtuelle Teilelement (22) einen Schärfegradienten aufweisen.

5. Verfahren nach einem der Ansprüche 1 bis 4, **dadurch gekennzeichnet, dass** das erste virtuelle Teilelement (20) und das zweite virtuelle Teilelement (22) einen Helligkeitsgradienten aufweisen.

6. Verfahren nach einem der Ansprüche 1 bis 5, **dadurch gekennzeichnet, dass** die Qualität der geometrisch korrekten Darstellung des virtuellen Elements (10) in Abhängigkeit der visuellen Qualität des virtuellen Elements (10) für einen Fahrer des Fahrzeugs überprüft wird.

7. Verfahren nach Anspruch 6, **dadurch gekennzeichnet, dass** die Qualität der geometrisch korrekten Darstellung des virtuellen Elements (10) reduziert wird, wenn die visuelle Qualität des virtuellen Elements (10) einen zuvor bestimmten Grenzwert erreicht.

8. Vorrichtung zur Darstellung mindestens eines virtuellen Elements (10), mit mindestens einer Anzeigeeinrichtung (14) mit mindestens einem Anzeigebereich (12), **dadurch gekennzeichnet, dass** die Anzeigeeinrichtung (14) dafür ausgelegt ist, ein Verfahren nach einem der Ansprüche 1 bis 7 durchzuführen.

9. Fahrzeug mit einer Vorrichtung zur Darstellung mindestens eines virtuellen Elements (10), **dadurch gekennzeichnet, dass** die Vorrichtung gemäß Anspruch 8 ausgestaltet ist.

## Claims

1. Method for depicting at least one virtual element (10) in a display region (12) of at least one display device (14) of a vehicle, a three-dimensional space (16) being depicted in the display region (12) of the display device (14), three-dimensional coordinates being determined, on the basis of at least one data source, in the three-dimensional space (16) for localizing at least one virtual element (10), the at least one virtual element (10) being transformed as a two-dimensional image (18) into the three-dimensional space (16), which is depicted in the display region (12) of the display device (14) in the form of a boundary of a lane, and the at least one virtual element (10) being depicted in the display region (12) of the display device (14) correctly in perspective in the field of vision of the driver with respect to the three-dimensional space (16), the virtual element (10) being composed of at least a first virtual partial element (20) and a second virtual partial element (22), the first virtual partial element (20) being arranged in perspective in the display region in front of the second partial element (22), **characterized in that** at least a third virtual partial element (24) is provided, **in that** the third virtual partial element (24) is arranged in perspective in the display region (12) behind the second virtual partial element (22), **in that** the first virtual partial element (20) is at a first distance from the second virtual partial element (22), **in that** the second virtual partial element (22) is at a second distance from the third virtual partial element (24), **and in that** the first distance (26) is greater than the second distance (28).

2. Method according to claim 1, **characterized in that** the first virtual partial element (20) and the second virtual partial element (22) are depicted as having a depth extension, so that the virtual element (10), at an increasing distance, is depicted as being smaller and higher in the display region (12) of the display device (14).

3. Method according to either claim 1 or claim 2, **characterized in that** the first virtual partial element (20) and the second virtual partial element (22) have a texture gradient.

4. Method according to any of claims 1 to 3, **characterized in that** the first virtual partial element (20) and the second virtual partial element (22) have a sharpness gradient.

5. Method according to any of claims 1 to 4, **characterized in that** the first virtual partial element (20) and the second virtual partial element (22) have a brightness gradient.

6. Method according to any of claims 1 to 5, **characterized in that** the quality of the geometrically correct depiction of the virtual element (10) is checked depending on the visual quality of the virtual element (10) for a driver of the vehicle.

7. Method according to claim 6, **characterized in that** the quality of the geometrically correct depiction of the virtual element (10) is reduced if the visual quality of the virtual element (10) reaches a previously determined limit value.

8. Apparatus for depicting at least one virtual element (10), comprising at least one display device (14) having at least one display region (12), **characterized in that** the display device (14) is designed to carry out a method according to any of claims 1 to 7.

9. Vehicle having an apparatus for depicting at least one virtual element (10), **characterized in that** the apparatus is configured according to claim 8.

## Revendications

1. Procédé destiné à représenter au moins un élément virtuel (10) dans une zone d'affichage (12) d'au moins un appareil d'affichage (14) d'un véhicule, dans lequel dans la zone d'affichage (12) de l'appareil d'affichage (14) un espace tridimensionnel (16) est représenté, dans lequel, sur la base d'au moins une source de données, des coordonnées tridimensionnelles dans l'espace tridimensionnel (16) sont déterminées pour la localisation d'au moins un élément virtuel (10), dans lequel l'au moins un élément virtuel (10) est transformé sous forme d'image bidimensionnelle (18) dans l'espace tridimensionnel (16), qui est représenté dans la zone d'affichage (12) de l'appareil d'affichage (14) sous la forme d'une délimitation d'une voie de circulation et dans lequel l'au moins un élément virtuel (10) dans la zone d'affichage (12) de l'appareil d'affichage (14) est représenté correctement en perspective par rapport à l'espace tridimensionnel (16) dans le champ de vision du conducteur, dans lequel l'élément virtuel (10) est composé d'au moins un premier élément partiel virtuel (20) et d'au moins un deuxième élément partiel virtuel (22), dans lequel le premier élément partiel virtuel (20) est disposé en perspective dans la zone d'affichage devant le deuxième élément partiel (22), **caractérisé en ce qu'au** moins un troisième élément partiel virtuel (24) est prévu, que le troisième élément partiel virtuel (24) est disposé en perspective dans la zone d'affichage (12) derrière le deuxième élément partiel virtuel (22), que le premier élément partiel virtuel (20) présente une première distance par rapport au deuxième élément partiel virtuel (22), que le deuxième élément partiel virtuel (22) présente une deuxième distance par rapport au troisième élément partiel virtuel (24) et que la première distance (26) est supérieure à la deuxième distance (28).

2. Procédé selon la revendication 1, **caractérisé en ce que** le premier élément partiel virtuel (20) et le deuxième élément partiel virtuel (22) sont représentés avec une extension en profondeur de sorte que l'élément virtuel (10) est représenté plus petit et plus haut dans la zone d'affichage (12) de l'appareil d'affichage (14) à mesure que la distance augmente.

3. Procédé selon la revendication 1 ou 2, **caractérisé en ce que** le premier élément partiel virtuel (20) et le deuxième élément partiel virtuel (22) présentent un gradient de texture.

4. Procédé selon l'une des revendications 1 à 3, **caractérisé en ce que** le premier élément partiel virtuel (20) et le deuxième élément partiel virtuel (22) présentent un gradient de netteté.

5. Procédé selon l'une des revendications 1 à 4, **caractérisé en ce que** le premier élément partiel virtuel (20) et le deuxième élément partiel virtuel (22) présentent un gradient de luminosité.

6. Procédé selon l'une des revendications 1 à 5, **caractérisé en ce que** la qualité de la représentation géométriquement correcte de l'élément virtuel (10) est vérifiée en fonction de la qualité visuelle de l'élément virtuel (10) pour un conducteur du véhicule.

7. Procédé selon la revendication 6, **caractérisé en ce que** la qualité de la représentation géométriquement correcte de l'élément virtuel (10) est réduite lorsque la qualité visuelle de l'élément virtuel (10) atteint une valeur limite définie au préalable.

8. Dispositif destiné à représenter au moins un élément virtuel (10), comportant au moins un appareil d'affichage (14) comportant au moins une zone d'affichage (12), **caractérisé en ce que** l'appareil d'affichage (14) est conçu pour réaliser un procédé selon l'une des revendications 1 à 7.

9. Véhicule comportant un dispositif destiné à représenter au moins un élément virtuel (10), **caractérisé en ce que** le dispositif est conçu selon la revendication 8.
